# EUROPEAN PATENT APPLICATION

(11) **EP 4 582 614 A1**
(43) Date of publication of application: **09.07.2025**
(21) Application number: 23859244.8
(22) Date of filing: 24.08.2023
(51) Int. Cl.: D06F 25/00, D06F 37/22, D06F 37/30, D06F 58/04

(54) **DRYING MODULE, AND WASHING-DRYING INTEGRATED MACHINE**

(30) Priority: 31.08.2022 CN 202222327013 U; 31.08.2022 CN 202222326904 U; 31.08.2022 CN 202222307976 U
(71) Applicant: Nanjing Roborock Innovation Technology Co., Ltd., Nanjing, Jiangsu 210039 (CN)
(72) Inventor: LI, Xing, Shenzhen, Guangdong 518000 (CN); DUAN, Chuanlin, Shenzhen, Guangdong 518000 (CN); YANG, Zhimin, Shenzhen, Guangdong 518000 (CN); LIU, Tong, Shenzhen, Guangdong 518000 (CN); YANG, Cheng, Shenzhen, Guangdong 518000 (CN); QI, Hang, Shenzhen, Guangdong 518000 (CN); QUAN, Gang, Shenzhen, Guangdong 518000 (CN)
(74) Representative: Cabinet Beau de Loménie
(86) International application number: PCT/CN2023/114753
(87) International publication number: WO 2024/046211

(57) **Abstract**

A drying module and a laundry dryer of a washing-drying integrated machine. The drying module (D) comprises a moisture absorption and removal assembly (D1). The moisture absorption and removal assembly (D1) comprises a moisture absorption rotary wheel component (D11), a rotary wheel shell (D12), and a rotary wheel driving mechanism (D13) for driving the moisture absorption rotary wheel component (D11) to rotate. The moisture absorption rotary wheel component (D11) is rotatably arranged inside the rotary wheel shell (D12); the moisture absorption rotary wheel component (D11) comprises an outer peripheral shell member (D112), wherein a power input member **(D114),** which is used for introducing power for rotating the moisture absorption rotary wheel component (D11) from the rotary wheel driving mechanism (D13), is arranged at an outer peripheral edge of the outer peripheral shell member (D112), and the power input member (D114) is driven by means of the rotary wheel driving mechanism (D13) at the outer peripheral edge thereof. The drying module can contribute to the reduction of the overall height or thickness of the washing-drying integrated machine, such that no transmission structure which hinders an airflow from flowing therethrough is arranged at a central area of a wheel disk, which is also beneficial for guiding the airflow to pass through the wheel disk more uniformly.

## Description

### CROSS-REFERENCE TO RELATED APPLICATIONS

This application claims priority to Chinese Patent Applications No. 202222327013.2, titled "WASHER-DRYER MACHINE" and filed on August 31, 2022, No. 202222326904.6, titled "WASHER-DRYER MACHINE" and filed on August 31, 2022, and No. 202222307976.6, titled "WASHER-DRYER MACHINE" and filed on August 31, 2022, the entire contents of all of which are incorporated herein by reference.

### TECHNICAL FIELD

The present disclosure belongs to the field of electrical appliance technologies, and specifically to a drying module and a washer-dryer machine.

### BACKGROUND

For the washing machine industry, a fully automatic dryer-washer machine can dry laundry after washing. This function is especially suitable for damp weather, and therefore becomes increasingly popular among consumers. Conventional washer-dryer machines generally include an exhaust type, a condensing type, and a heat pump type, the three types of washer-dryer machines sequentially having drying effects in ascending order of quality and correspondingly having prices in ascending order.

To ensure a satisfying drying effect while reducing a price, a moisture absorption material-based washer-dryer machine is proposed recently. In this washer-dryer machine, a moisture absorption disk formed by a moisture absorption material is rotatably arranged in a shell. An inner cavity of the shell is divided into a moisture absorption area and a moisture removal area. The moisture absorption disk absorbs moisture when rotating to the moisture absorption area and removes the moisture when rotating to the moisture removal area, and therefore possesses a continuous moisture absorption capability. Therefore, an airflow that cyclically flows through a drum and the moisture absorption disk can dry laundry in the drum.

However, in the related art, the moisture absorption disk is driven by a driving mechanism arranged on an axis of rotation of the moisture absorption disk. In one aspect, this arrangement manner increases a structural size along the axis of rotation, but a large height or thickness is unfavorable for a washer-dryer machine, especially for a household washer-dryer machine. In another aspect, a connecting position between the moisture absorption disk and the driving mechanism is disposed at the center of the moisture absorption disk, and a structure related to the connecting position affects the passage of an airflow in a space in which the moisture absorption disk is disposed. As a result, the airflow cannot uniformly reach the moisture absorption disk, causing reduced moisture absorption efficiency.

### SUMMARY OF THE INVENTION

To overcome the foregoing deficiencies, embodiments of the present disclosure provide a drying module and a washer-dryer machine.

A drying module provided in the present disclosure includes a moisture absorption and removal assembly. The moisture absorption and removal assembly includes a moisture absorption rotary wheel component, a rotary wheel shell, and a rotary wheel driving mechanism for driving the moisture absorption rotary wheel component to rotate. The moisture absorption rotary wheel component is rotatably arranged inside the rotary wheel shell, and includes an outer peripheral shell member. A power input member configured to introduce power from the rotary wheel driving mechanism for rotating the moisture absorption rotary wheel component is arranged at an outer peripheral edge of the outer peripheral shell member, and the power input member is driven by the rotary wheel driving mechanism at an outer peripheral edge of the power input member.

For the drying module provided in the present application, the rotary wheel driving mechanism arranged at an outer peripheral edge of the moisture absorption rotary wheel component can flexibly utilize a space around the moisture absorption rotary wheel component, such that an axial size of the moisture absorption and removal assembly is reduced, making the overall moisture absorption and removal assembly flatter. This can contribute to the reduction of the overall height or thickness of a washer-dryer machine. In addition, in the present technical solution, inside the rotary wheel shell, no transmission structure that hinders an airflow from flowing therethrough is arranged at a central area of a wheel disk, which is also beneficial for guiding an airflow to pass through the wheel disk more uniformly.

A washer-dryer machine provided in the present disclosure includes the foregoing drying module.

For the washer-dryer machine including the foregoing drying module, the rotary wheel driving mechanism arranged at an outer peripheral edge of the moisture absorption rotary wheel component of the drying module can flexibly utilize a space around the moisture absorption rotary wheel component, such that an axial size of the moisture absorption and removal assembly is reduced, making the overall moisture absorption and removal assembly flatter. This can contribute to the reduction of the overall height or thickness of the washer-dryer machine. In addition, in the present technical solution, inside the rotary wheel shell, no transmission structure that hinders an airflow from flowing therethrough is arranged at a central area of a wheel disk, which is also beneficial for guiding an airflow to pass through the wheel disk more uniformly.

### BRIEF DESCRIPTION OF DRAWINGS

For clearer descriptions of the technical solutions in the embodiments of the present invention, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.

In the accompanying drawings:
FIG. 1 is a schematic structural diagram of a washer-dryer machine according to some embodiments of the present disclosure;
FIG. 2 is an exploded view of a moisture absorption and removal assembly in FIG. 1;
FIG. 3 is an exemplary schematic assembly diagram of a moisture absorption rotary wheel component and a rotary wheel driving mechanism in an assembled state;
FIG. 4 is a top view of a rotary wheel lower shell with a peripheral-side roller mechanism and a bottom roller mechanism;
FIG. 5 is an exemplary exploded view of a moisture absorption rotary wheel component;
FIG. 6 is a three-dimensional schematic diagram of a moisture absorption rotary wheel component and a rotary wheel lower shell with a bottom roller mechanism;
FIG. 7 is a top view of a rotary wheel lower shell with a bottom roller mechanism;
FIG. 8 is a three-dimensional schematic diagram of a bottom roller mechanism;
FIG. 9 is a three-dimensional schematic diagram of a bottom roller;
FIG. 10 is a three-dimensional schematic diagram of a moisture absorption rotary wheel component and a rotary wheel lower shell with a peripheral-side roller mechanism;
FIG. 11 is a top view of a rotary wheel lower shell with a peripheral-side roller mechanism;
FIG. 12 is a schematic structural diagram of a peripheral-side roller;
FIG. 13 is an exploded view of a moisture absorption rotary wheel component; and
FIG. 14 is a schematic assembly diagram of a peripheral-side roller and an auxiliary rotation ring in rolling contact.

### DETAILED DESCRIPTION

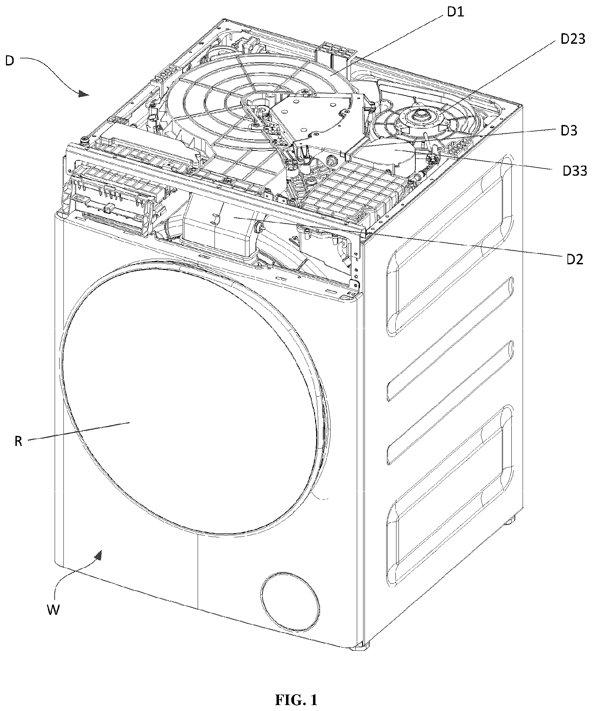

FIG. 1 is a schematic structural diagram of a washer-dryer machine according to some embodiments of the present disclosure. For clarity, a part of an outer shell of the washer-dryer machine is omitted in FIG. 1. With reference to FIG. 1, the washer-dryer machine W includes a water inlet, a water outlet, a drum R, a drum driving portion, and a drying module D. The drum R includes an inner drum and an outer drum. The drum driving portion is transmission-connected to the inner drum of the drum R to drive the inner drum of the drum R to rotate. The outer drum is arranged to be suspended or hung below a frame of the washer-dryer machine. The water inlet and the water outlet are respectively connected to the drum R. The drying module D includes a moisture absorption and removal assembly D1, a moisture absorption passage D2, and a moisture removal passage D3. The moisture absorption passage D2 includes a moisture absorption passage air inlet and a moisture absorption passage air outlet. The drum R is respectively connected to the moisture absorption passage air inlet and the moisture absorption passage air outlet. A moisture absorption passage fan D23 is further arranged in the moisture absorption passage D2, to form a circulating moisture absorption airflow in the drum R and the moisture absorption passage D2. A moisture removal passage fan D33 is arranged in the moisture removal passage D3, to form a moisture removal airflow in the moisture removal passage D3. The moisture absorption and removal assembly D1 is arranged in a path of the moisture absorption passage D2 and the moisture removal passage D3, to enable both the moisture absorption airflow and the moisture removal airflow to flow through the moisture absorption and removal assembly D1, such that the moisture absorption and removal assembly D1 absorbs moisture in the moisture absorption airflow and removes the absorbed moisture through the moisture removal airflow in a rotation process. Certainly, the washer-dryer machine W may further include, but not limited to, an outer shell at least provided with a laundry port and a detergent feeding port, a door body for closing the laundry port, and members such as a display and operation device, a frame, a controller, and a drain pipe that are arranged on the outer shell, to implement washing and drying functions of laundry and operation of the washer-dryer machine.

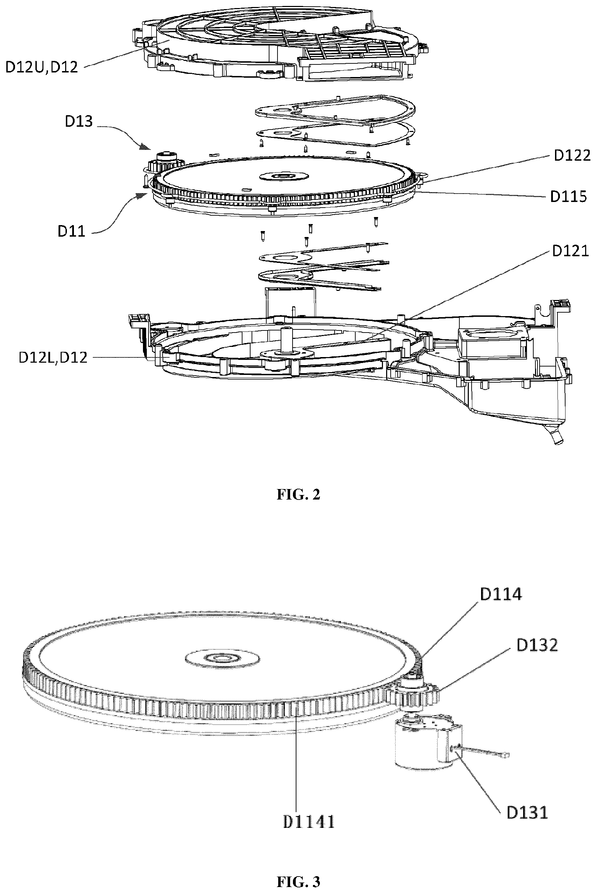

FIG. 2 is an exploded view of a moisture absorption and removal assembly in FIG. 1. With reference to FIG. 2, the moisture absorption and removal assembly D1 includes a moisture absorption rotary wheel component D11, a rotary wheel shell D12, and a rotary wheel driving mechanism D13. The rotary wheel shell D12 includes a rotary wheel upper shell D12U and a rotary wheel lower shell D12L, which are fixed to each other to form an internal cavity. The moisture absorption rotary wheel component D11 is rotatably arranged in the internal cavity of the rotary wheel shell D12 along an axis of rotation of the moisture absorption rotary wheel component D11, and is driven by the rotary wheel driving mechanism D13 to rotate.

The rotary wheel shell D12 further includes a moisture absorption airflow inlet and a moisture absorption airflow outlet. As seen along the axis of rotation of the moisture absorption rotary wheel component D11, the moisture absorption airflow inlet and the moisture absorption airflow outlet of the rotary wheel shell D12 are arranged on two sides of the moisture absorption rotary wheel component D11, to enable the moisture absorption airflow to pass through the moisture absorption rotary wheel component D11. When the moisture absorption airflow passes through the moisture absorption rotary wheel component D11, moisture in the moisture absorption airflow is absorbed by the moisture absorption rotary wheel component D11, such that the moisture absorption airflow that flows out from the moisture absorption rotary wheel component D11 becomes dry. The dry airflow is later transported to the drum R to take away moisture in the drum R. The rotary wheel shell D12 further includes a moisture removal airflow inlet and a moisture removal airflow outlet. As seen along the axis of rotation of the moisture absorption rotary wheel component D11, the moisture removal airflow inlet and the moisture removal airflow outlet of the rotary wheel shell D12 are also arranged on the two sides of the moisture absorption rotary wheel component D11, such that a moisture removal airflow can pass through the moisture absorption rotary wheel component D11. When the moisture removal airflow passes through the moisture absorption rotary wheel component D11, moisture in the moisture absorption rotary wheel component D11 is carried away by the supplied dry moisture removal airflow, to implement regeneration of the moisture absorption rotary wheel component D11, thereby ensuring a continuous moisture absorption capability of the moisture absorption rotary wheel component D11. At least two pairs of partitioning ribs D121 that face each other and extend toward each other are arranged on end-surface inner walls of the rotary wheel upper shell D12U and the rotary wheel lower shell D12L of the rotary wheel shell D12 respectively, to separate an internal space of the rotary wheel shell D12 into a moisture absorption area D1211 and a moisture removal area D1212, and to enable the moisture absorption airflow and the moisture removal airflow to be separated inside the rotary wheel shell D12. In other embodiments, partitioning ribs can be arranged on the end-surface inner wall of only one of the rotary wheel upper shell D12U and the rotary wheel lower shell D12L, and a number of the partitioning ribs may be any other number greater than 2.

When the washer-dryer machine W enters a drying mode, the moisture absorption passage fan D23 is controlled to start, to form the moisture absorption airflow in the moisture absorption passage D2. The moisture absorption airflow flows through the drum R to take away partial moisture in the inner cavity of the drum R, and the airflow that turns wet subsequently flows into the moisture absorption and removal assembly D1. The wet moisture absorption airflow enters the moisture absorption area D1211 of the rotary wheel shell D12 through the moisture absorption airflow inlet of the rotary wheel shell D12, and passes through the rotating moisture absorption rotary wheel component D11. Because a wheel disk D111 in the moisture absorption rotary wheel component D11 has a moisture absorption characteristic, the moisture absorption airflow is dried when passing through the moisture absorption rotary wheel component D11. The moisture absorption airflow that flows out of the moisture absorption rotary wheel component D11 turns dry. The dry moisture absorption airflow is transported into the drum again. This cycle is repeated until a preset drying effect is achieved. However, the moisture absorption capability of the wheel disk D111 is limited. After a period of time, the wheel disk D111 becomes saturated and can absorb no more moisture. For this, a moisture removal passage is arranged. The moisture removal passage fan D33 is controlled by the controller to start at an appropriate timing, to form the moisture removal airflow in the moisture removal passage. The moisture removal passage may be connected to an external environment or may have inner circulation. However, in both cases, it needs to be ensured that an airflow that enters the moisture removal area D1212 of the moisture absorption rotary wheel component D11 through an entrance of the moisture removal passage is dry, such that moisture in the rotating wheel disk can be desorbed and taken away by the moisture removal airflow. In this way, the wheel disk D111 absorbs moisture when rotating to the moisture absorption area D1211 and removes the moisture when rotating to the moisture removal area D1212, and therefore possesses a continuous moisture absorption capability, thereby continuously drying the inner cavity of the drum.

FIG. 3 is an exemplary schematic assembly diagram of a moisture absorption rotary wheel component and a rotary wheel driving mechanism in an engaged state. As shown in FIG. 3, the moisture absorption rotary wheel component D11 is driven by the rotary wheel driving mechanism D13 at an outer peripheral edge of the moisture absorption rotary wheel component D11 instead of being driven at a central area thereof. That is, the rotary wheel driving mechanism D13 applies a driving force to the outer peripheral edge of the moisture absorption rotary wheel component D11.

Specifically, the moisture absorption rotary wheel component D11 includes a power input member D114 configured to introduce power from the rotary wheel driving mechanism D13 for rotating the moisture absorption rotary wheel component D11. The power input member D114 is integrally formed on an outer peripheral surface of an outer peripheral shell member D112 of the moisture absorption rotary wheel component D11. Certainly, the power input member D114 can be separately manufactured and may be fixed on the outer peripheral surface of the outer peripheral shell member D112. The power input member D114 includes convex teeth D1141 uniformly distributed in a circumferential direction. In some embodiments, the convex teeth D1141 may be straight teeth.

With reference to FIG. 3, the rotary wheel driving mechanism D13 includes a rotary wheel driving motor D131 and a matching transmission mechanism D132. An output shaft of the rotary wheel driving motor D131 and the matching transmission mechanism D132 are connected to each other in a manner of being not rotatable with respect to each other; for example, they are connected to each other through key way fit. The matching transmission mechanism D132 is structured to match the power input member D114 of the moisture absorption rotary wheel component D11. In some embodiments, the matching transmission mechanism D132 is formed by spur gears that can be meshing with the straight teeth of the power input member D114.

With reference to FIG. 3, the moisture absorption rotary wheel component D11 and the rotary wheel driving mechanism D13 are basically arranged side by side in a direction perpendicular to the axis of rotation of the moisture absorption rotary wheel component D11, i.e., in a radial direction. The power input member D114 of the moisture absorption rotary wheel component D11 and the matching transmission mechanism D132 of the rotary wheel driving mechanism D13 are arranged in the same plane extending perpendicular to the axis of rotation. The rotary wheel driving motor D131 of the rotary wheel driving mechanism D13 is arranged below the matching transmission mechanism D132. The output shaft of the rotary wheel driving motor D131 extends in a direction parallel with the axis of rotation. In this way, a compact structure of the moisture absorption rotary wheel component D11 is realized. It is particularly favorable here that the rotary wheel driving mechanism D13 is completely arranged outside a size range of the moisture absorption rotary wheel component in the radial direction, such that passage of an airflow through the moisture absorption rotary wheel component D11 can be prevented from being hindered.

In other unshown embodiments, the power input member can be further structured as teeth of another type, for example, helical teeth, or curved teeth. For example, the curved teeth may be structured at an end surface of an outer edge of the outer peripheral shell member of the moisture absorption rotary wheel component, and the matching transmission mechanism is correspondingly structured as a bevel gear. In such an embodiment, the output shaft of the rotary wheel driving motor is arranged to be perpendicular to the axis of rotation of the moisture absorption rotary wheel component.

In other unshown embodiments, the power input member can be formed by a smooth surface or profiled grooves that are uniformly distributed in the circumferential direction, and correspondingly the matching transmission mechanism is structured as a friction belt pulley, for example, a belt pulley with flat belt drive, or an engagement belt pulley, for example, a cogged belt pulley. When the matching transmission mechanism is structured as a friction belt pulley, favorably, the power input member is structured as a smooth surface with a surface microstructure for increasing friction.

In other unshown embodiments, the power input member D114 can be formed by sprocket teeth, and correspondingly the matching transmission mechanism is structured as a sprocket.

As shown in FIG. 2, the rotary wheel driving mechanism D13 and the moisture absorption rotary wheel component D11 share one rotary wheel shell D12. In other words, the rotary wheel shell D12 includes an accommodating portion for accommodating the moisture absorption rotary wheel component D11 and the rotary wheel driving mechanism D13 respectively. This arrangement manner is favorable for the sealing of the moisture absorption airflow and the moisture removal airflow. Because the moisture absorption airflow and the moisture removal airflow can be kept from escaping outside the rotary wheel shell D12 through the overall outer peripheral sealing of the rotary wheel shell D12. At an accommodating portion for the rotary wheel driving mechanism D13 of the rotary wheel shell D12, a baffle is arranged, and a sealing member is optionally arranged, to block an airflow from passing through the accommodating portion for the moisture absorption rotary wheel component D11 to the accommodating portion for the rotary wheel driving mechanism D13, thereby protecting the rotary wheel driving mechanism D13 from becoming wet.

Certainly, it may also be conceived that the rotary wheel driving mechanism D13 and the moisture absorption rotary wheel component D11 have respective independent shells that are fixed to each other. In such an embodiment, an additional sealing member needs to be arranged at seal positions where the respective shells of the rotary wheel driving mechanism D13 and the moisture absorption rotary wheel component D11 are fixed to each other.

The rotary wheel driving mechanism D13 arranged at an outer peripheral edge of the moisture absorption rotary wheel component D11 can flexibly utilize a space around the moisture absorption rotary wheel component D11, such that an axial size of the moisture absorption and removal assembly D1 is reduced, making the overall moisture absorption and removal assembly D1 flatter. This can contribute to the reduction of the overall height or thickness of a washer-dryer machine. In addition, in this embodiment, inside the rotary wheel shell D12, no transmission structure that hinders an airflow from flowing therethrough is arranged at a central area of a wheel disk, which is also beneficial for guiding an airflow to pass through the wheel disk more uniformly.

Because a driving force is loaded at the outer peripheral edge of the moisture absorption rotary wheel component D11, force bearing of the moisture absorption rotary wheel component D11 is noncentrosymmetric. To enable the moisture absorption rotary wheel component D11 to rotate more stably when being driven on a peripheral side, it is particularly favorable to use a peripheral-side roller mechanism and/or the bottom roller mechanism D123 to assist the moisture absorption rotary wheel component D11 to rotate stably.

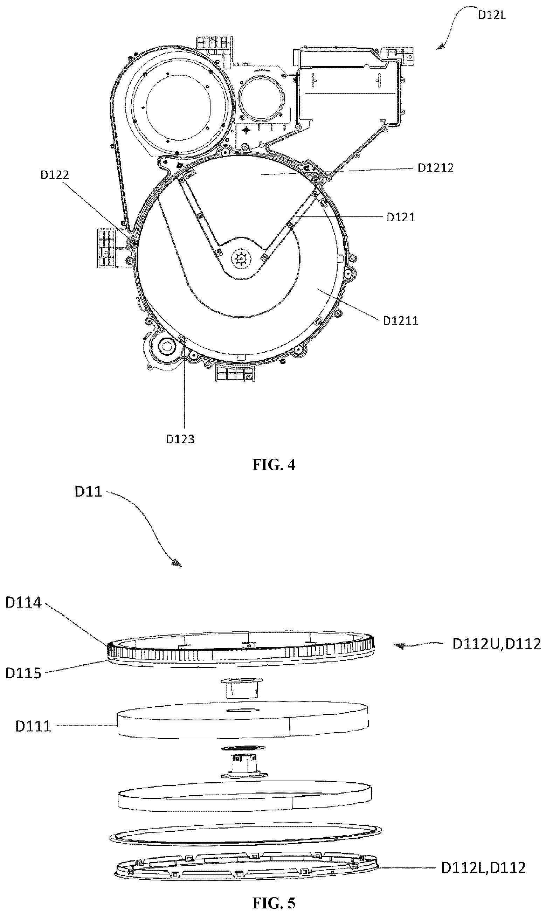

FIG. 4 is a top view of a rotary wheel lower shell with a peripheral-side roller mechanism and a bottom roller mechanism D123. As shown in FIG. 4, a plurality of, here for example, six, peripheral-side roller mechanisms D122, are arranged at an inner peripheral edge of the rotary wheel shell D12. Each of the peripheral-side roller mechanisms D122 includes a peripheral-side roller D1221 and a peripheral-side roller support D1222. The peripheral-side roller D1221 is rotatably arranged on the peripheral-side roller support D1222, and the peripheral-side roller support D1222 is arranged at the inner peripheral edge of the rotary wheel shell D12. As seen in a direction parallel to the axis of rotation of the moisture absorption rotary wheel component D11, i.e., an axial direction, the peripheral-side roller D1221 is arranged in a size range of the moisture absorption rotary wheel component D11 in the axial direction. As seen in the direction perpendicular to the axis of rotation of the moisture absorption rotary wheel component D11, i.e., the radial direction, the peripheral-side roller D1221 is arranged between the moisture absorption rotary wheel component D11 and the rotary wheel shell D12, and the peripheral-side roller D1221 is capable of being in rolling contact with an outer peripheral surface of the moisture absorption rotary wheel component D11 for at least a period of time in a rotation process of the moisture absorption rotary wheel component D11. In this embodiment, the peripheral-side roller D1221 at least partially protrudes from an entire inner peripheral wall at the inner peripheral edge of the rotary wheel shell D12 toward the axis of rotation.

As shown in FIG. 4, a plurality of, here for example, four, bottom roller mechanisms D123, are further arranged at an inner bottom wall of the rotary wheel shell D12. Each of the bottom roller mechanisms D123 includes a bottom roller D1231 and a bottom roller support D1232. The bottom roller D1231 is rotatably arranged on the bottom roller support D1232. The bottom roller support D1232 is arranged on the rotary wheel shell D12. As seen in the direction perpendicular to the axis of rotation of the moisture absorption rotary wheel component D11, i.e., the radial direction, the bottom roller D1231 is arranged in a size range of the moisture absorption rotary wheel component D11 in the radial direction. And as seen in a direction parallel to the axis of rotation of the moisture absorption rotary wheel component D11, i.e., the axial direction, the bottom roller D1231 is arranged between the moisture absorption rotary wheel component D11 and the rotary wheel shell D12, and a spacing between the bottom roller D1231 and the moisture absorption rotary wheel component D11 is less than a minimum spacing between the moisture absorption rotary wheel component D11 and the rotary wheel shell D12. In some embodiments, the bottom roller D1231 at least partially protrudes from the entire inner bottom wall of the rotary wheel shell D12 toward the moisture absorption rotary wheel component D11.

FIG. 5 is an exemplary exploded view of a moisture absorption rotary wheel component D11. With reference to FIG. 5, the moisture absorption rotary wheel component D11 includes, but is not limited to, a wheel disk D111, an outer peripheral shell member D112, and a power input member D114 and an auxiliary rotation ring D115 that are configured at an outer peripheral edge of the outer peripheral shell member D112.

With reference to FIG. 5, the outer peripheral shell member D112 is formed by an outer peripheral upper clamping shell D112U and an outer peripheral lower clamping shell D112L that are annularly structured. The outer peripheral upper clamping shell D112U has a longitudinal section similar to an L shape, and includes an end portion section extending in the radial direction, and a circumferential section extending in the axial direction. Similarly, the outer peripheral lower clamping shell D112L has a longitudinal section similar to an L shape, and includes an end portion section extending in the radial direction, and a circumferential section extending in the axial direction. The outer peripheral upper clamping shell D112U and the outer peripheral lower clamping shell D112L are clamped to each other through a buckle and a clamping groove configured thereon, such that a recess that is open on only one side and is used for accommodating a peripheral edge area of the wheel disk D111 is formed on inner sides of the outer peripheral upper clamping shell D112U and the outer peripheral lower clamping shell D112L. In a clamped state, the outer peripheral upper clamping shell D112U and the outer peripheral lower clamping shell D112L surround the entire outer peripheral surface of the wheel disk D111 and respectively clamp the wheel disk D111 from upper and lower end surfaces of the peripheral edge area of the wheel disk D111, such that the outer peripheral shell member D112 and the wheel disk D111 are connected together in a manner of being not rotatable with respect to each other.

With reference to FIG. 4 and FIG. 5, the bottom roller mechanism D123 is arranged in an area that is in an inner bottom surface of the rotary wheel shell D12 and is opposite to an end portion section of the outer peripheral shell member D112 facing the inner bottom surface, i.e., the end portion section of the outer peripheral lower clamping shell D112L, such that the end portion section of the outer peripheral shell member D112 can be in rolling contact with the bottom roller mechanism D123. An axial spacing between the bottom roller mechanism D123 and the outer peripheral shell member D112 is set that in an initial mounting position of the bottom roller mechanism D123, the bottom roller mechanism D123 is already in rolling contact with the end portion section of the outer peripheral lower clamping shell D112L. In this way, the bottom roller mechanism D123 can assist in the driving of the moisture absorption rotary wheel component D11 at the outer peripheral edge of the moisture absorption rotary wheel component D11 by the rotary wheel driving mechanism D13, such that the moisture absorption rotary wheel component D11 can run stably in a plane perpendicular to the axis of rotation.

With reference to FIG. 2, the auxiliary rotation ring D115 is arranged to match a position of the above-described peripheral-side roller mechanism D122, especially the peripheral-side roller D1221 in the peripheral-side roller mechanism D122, to form rolling fit with the peripheral-side roller D1221 in the peripheral-side roller mechanism D122. The auxiliary rotation ring D115 can be integrally formed with the outer peripheral upper clamping shell D112U, and can be separately manufactured and then fixed, for example, welded, on an outer peripheral surface of the outer peripheral upper clamping shell D112U. In the initial mounting position, the auxiliary rotation ring D115 is kept in contact with the peripheral-side roller D1221 in the peripheral-side roller mechanism D122 without clear compression. When the moisture absorption rotary wheel component D11 starts to rotate, the auxiliary rotation ring D115 of the moisture absorption rotary wheel component D11 is in rolling contact with the peripheral-side roller D1221 in the peripheral-side roller mechanism D122, to inhibit shaking of the moisture absorption rotary wheel component D11 in the radial direction. In this way, it can be ensured that the moisture absorption rotary wheel component D11 runs stably along a preset axis of rotation nearly without increasing rotational resistance of the moisture absorption rotary wheel component D11.

It may also be conceived that the auxiliary rotation ring D115 and the power input member D114 can be arranged at an outer peripheral edge of the outer peripheral lower clamping shell D112L or respectively disposed at outer peripheral edges of the outer peripheral upper clamping shell D112U and the outer peripheral lower clamping shell D112L, so long as the auxiliary rotation ring D115 and the power input member D114 are completely staggered in the direction of the axis of rotation.

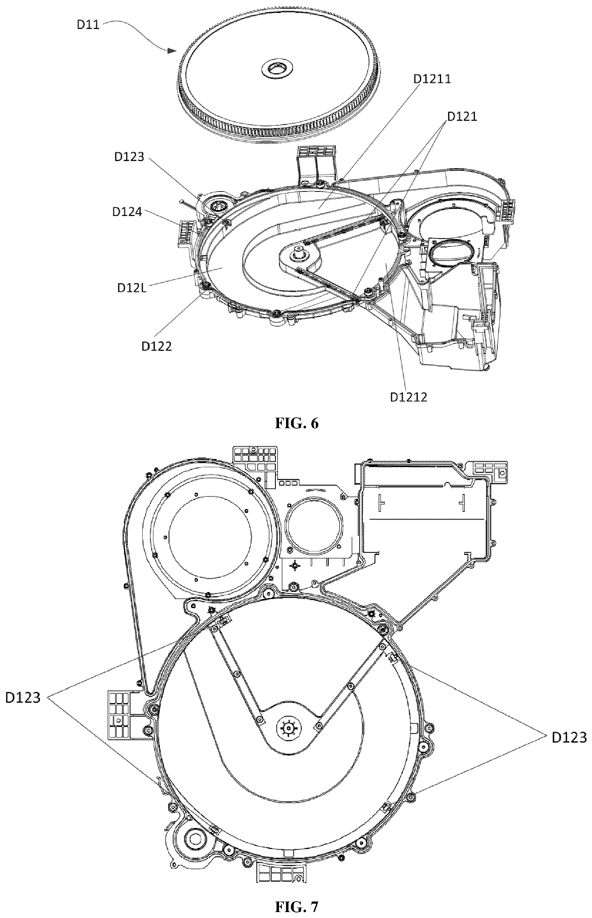

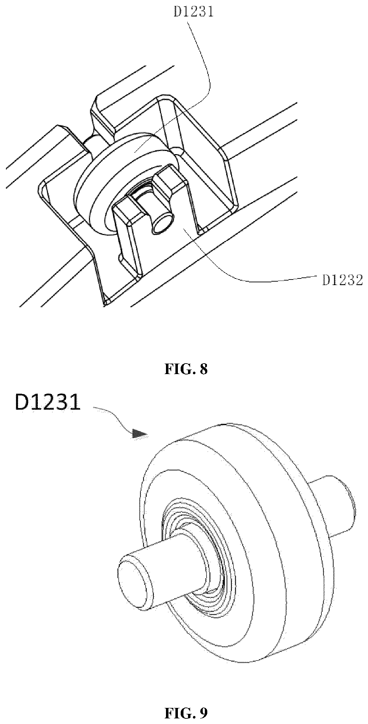

FIG. 6 is a three-dimensional schematic diagram of a moisture absorption rotary wheel component D11 and a rotary wheel lower shell with a bottom roller mechanism D123. FIG. 7 is a top view of a rotary wheel lower shell with a bottom roller mechanism D123. FIG. 8 is a three-dimensional schematic diagram of a bottom roller mechanism D123. With reference to FIG. 6 to FIG. 8, the bottom roller mechanism D123 includes a bottom roller D1231 and a bottom roller support D1232. The bottom roller D1231 is rotatably arranged on the bottom roller support D1232. The bottom roller support D1232 is arranged on the rotary wheel shell D12. As seen in the direction perpendicular to the axis of rotation of the moisture absorption rotary wheel component D11, i.e., the radial direction, the bottom roller D1231 is arranged in a size range of the moisture absorption rotary wheel component D11 in the radial direction. And as seen in a direction parallel to the axis of rotation of the moisture absorption rotary wheel component D11, i.e., the axial direction, the bottom roller D1231 is arranged between the moisture absorption rotary wheel component D11 and the rotary wheel shell D12, and a spacing between the bottom roller D1231 and the moisture absorption rotary wheel component D11 is less than a minimum spacing between the moisture absorption rotary wheel component D11 and the rotary wheel shell D12. In some embodiments, the bottom roller D1231 at least partially protrudes from an entire inner bottom surface of the rotary wheel shell D12 toward the moisture absorption rotary wheel component D11.

Certainly, it may also be conceived that a structure protruding downward is arranged at a bottom of the moisture absorption rotary wheel component D11 to match the bottom roller mechanism D123. In this case, the bottom roller may not be a part that protrudes the most on the entire inner bottom surface of the rotary wheel shell D12, but is definitely a part that first comes into contact with the moisture absorption rotary wheel component D11.

Therefore, at least when the moisture absorption rotary wheel component D11 has offset in the axial direction, the bottom roller mechanism D123 can provide rolling support for the bottom of the moisture absorption rotary wheel component D11, to reduce rotational resistance of the moisture absorption rotary wheel component D11 and wear related thereto, and protect the moisture absorption rotary wheel component D11 from colliding with the bottom of the rotary wheel shell D12.

In some embodiments, the four bottom roller mechanisms D123 are arranged on the inner bottom surface of the rotary wheel shell D12 in the same circumference, thereby providing the moisture absorption rotary wheel component D11 with relatively uniform rolling support. Certainly, it may also be conceived to arrange another number of bottom roller mechanisms D123. It is favorable that the plurality of bottom roller mechanisms D123 is uniformly distributed on the inner bottom surface of the rotary wheel shell D12 in the same circumference.

With reference to FIG. 5, the moisture absorption rotary wheel component D11 includes a wheel disk D111 and an outer peripheral shell member D112. The outer peripheral shell member D112 includes a pair of end portion sections extending in a direction perpendicular to the axis of rotation. End surfaces in a peripheral edge area of the wheel disk D111 are clamped by the pair of end portion sections. The bottom roller mechanism D123 is arranged in an area that is in an inner bottom surface of the rotary wheel shell D12 and that is opposite to an end portion section of the outer peripheral shell member D112 facing the inner bottom surface, such that the end portion section of the outer peripheral shell member D112 can be in rolling contact with the bottom roller mechanism D123.

In addition, it may be further conceived that the moisture absorption rotary wheel component D11 further includes a central shell member. The central shell member includes a pair of end portion sections extending in the direction perpendicular to the axis of rotation. End surfaces in the central area of the wheel disk are clamped by the pair of end portion sections. The bottom roller mechanism D123 is arranged in an area that is in the inner bottom surface of the rotary wheel shell D12 and that is opposite to the end portion sections of the central shell member here, such that the bottom roller mechanism D123 is in rolling contact with the end portion sections of the central shell member of the moisture absorption rotary wheel component D11.

In some embodiments, in the initial mounting position of the bottom roller mechanism D123, the bottom roller mechanism D123 is already in rolling contact with the bottom of the moisture absorption rotary wheel component D11. In this way, in one aspect, the bottom roller mechanism D123 keeps providing rolling support for the rotating moisture absorption rotary wheel component D11, such that a loss caused by sliding friction between the moisture absorption rotary wheel component D11 and the rotary wheel shell D12 is basically eliminated or a bearing element additionally arranged for this purpose is omitted. In another aspect, the bottom roller mechanism D123 can provide a limiting function, to prevent axial deflection of the moisture absorption rotary wheel component D11 toward the bottom of the rotary wheel shell D12, thereby preventing the moisture absorption rotary wheel component D11 from colliding with the rotary wheel shell D12. It is favorable here that the bottom roller is configured to be non-deformable to provide the rotating moisture absorption rotary wheel component D11 with stable rolling support. It is further favorable here that a mounting spacing between the bottom roller mechanism D123 and the moisture absorption rotary wheel component D11 ensures contact therebetween without a significant compression force.

In some other embodiments, in the initial mounting position of the bottom roller mechanism D123, a tiny gap is present between the bottom roller mechanism D123 and the moisture absorption rotary wheel component D11, especially between the bottom roller mechanism D123 and the outer peripheral shell member, such that the moisture absorption rotary wheel component D11 is kept from being in contact with the bottom roller mechanism D123 when rotating in a set rotational plane of the moisture absorption rotary wheel component D11, and is in rolling contact with the bottom roller mechanism D123 only when the moisture absorption rotary wheel component D11 deflects in the direction of the axis of rotation. It is favorable in this embodiment that the bottom roller is configured to be slightly deformable, thereby cushioning a force applied at the instant the moisture absorption rotary wheel component D11 contacts the bottom roller mechanism D123.

FIG. 9 is a three-dimensional schematic diagram of a bottom roller. With reference to FIG. 9, in some embodiments, a recess for accommodating the bottom roller mechanism D123 is arranged in an inner bottom surface of the rotary wheel shell D12. The bottom roller support D1232 of the bottom roller mechanism D123 is fixed in the recess. The bottom roller support D1232 is also structured as a hollow member, and an assembled bottom roller D1231 is partially accommodated in an inner cavity of the hollow member. This arrangement manner can further reduce a maximum size of the moisture absorption and removal assembly D1 in the direction of the axis of rotation, i.e., reduce the height of the moisture absorption and removal assembly D1. It may also be conceived that the bottom roller support is integrally formed on the inner bottom surface of the rotary wheel shell D12.

In other embodiments, the bottom roller support D1232 is fixed on the rotary wheel shell D12 through a first fixing mechanism structured to adjust an axial spacing between the bottom roller support D1232 and the moisture absorption rotary wheel component D11 in an initial mounting position.

In this way, the bottom roller mechanism D123 can adapt to moisture absorption rotary wheel components D11 of more sizes and can adapt to more running modes, for example, the mode of being in contact with the moisture absorption rotary wheel component D11 in an initial state and the mode of being not in contact with the moisture absorption rotary wheel component D11 in an initial state, which are described above.

With reference to FIG. 9, in some embodiments, a peripheral surface of the bottom roller D1231 is structured to be basically smooth. In other embodiments, the peripheral surface of the bottom roller D1231 is structured with an uneven surface structure. The bottom roller D1231 includes a bottom roller body and a bottom rotating shaft. In some embodiments, the bottom roller body is rotatable with respect to the bottom rotating shaft. The bottom rotating shaft and the bottom roller support D1232 only need to be connected together in a manner of being not rotatable with respect to each other here, for example, they are clamped together. In other embodiments, the bottom roller body is non-rotatable with respect to the bottom rotating shaft. In this case, the bottom rotating shaft and the bottom roller support D1232 need to be connected together in a manner of being rotatable with respect to each other.

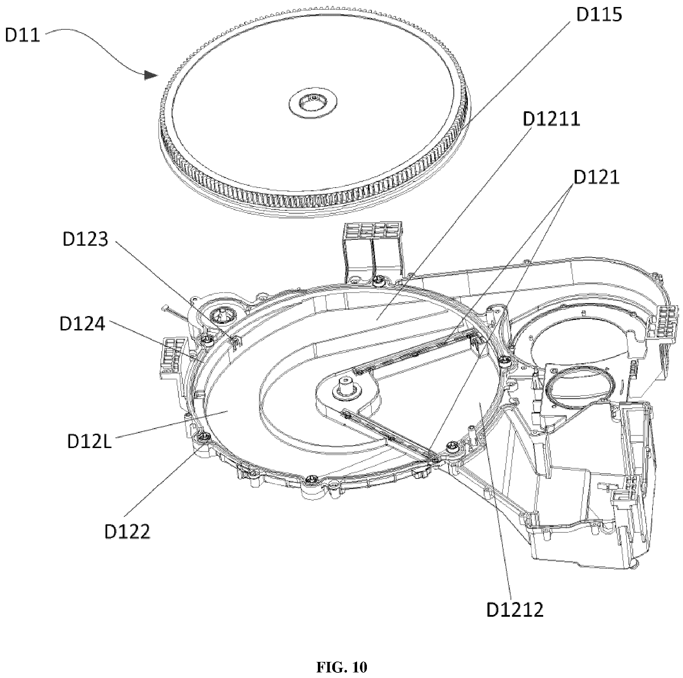

FIG. 10 is a three-dimensional schematic diagram of a moisture absorption rotary wheel component D11 and a rotary wheel lower shell with a peripheral-side roller mechanism. As shown in FIG. 2 and FIG. 10, a plurality of peripheral-side roller mechanisms D122 are arranged at an inner peripheral edge of the rotary wheel shell D12. Each of the peripheral-side roller mechanisms D122 includes a peripheral-side roller D1221 and a peripheral-side roller support D1222. The peripheral-side roller D1221 is rotatably arranged on the peripheral-side roller support D1222, and the peripheral-side roller support D1222 is arranged at the inner peripheral edge of the rotary wheel shell D12. As seen in a direction parallel to the axis of rotation of the moisture absorption rotary wheel component D11, i.e., an axial direction, the peripheral-side roller D1221 is arranged in a size range of the moisture absorption rotary wheel component D11 in the axial direction. That is, the peripheral-side roller D1221 is arranged in a thickness range of the moisture absorption rotary wheel component D11. As seen in the direction perpendicular to the axis of rotation of the moisture absorption rotary wheel component D11, i.e., the radial direction, the peripheral-side roller D1221 is arranged between the moisture absorption rotary wheel component D11 and the rotary wheel shell D12, and the peripheral-side roller D1221 is capable of being in rolling contact with an outer peripheral surface of the moisture absorption rotary wheel component D11 for at least a period of time in a rotation process of the moisture absorption rotary wheel component D11.

As shown in FIG. 10, an inner peripheral edge of the rotary wheel lower shell D12L is structured in a step form. A peripheral-side roller support D1222 is arranged on an end surface of the step extending in a direction perpendicular to the axis of rotation, i.e., a radial direction. The peripheral-side roller D1221 is rotatably arranged on the peripheral-side roller support D1222. In this embodiment, an assembled peripheral-side roller D1221 at least partially protrudes from an entire inner peripheral wall at the inner peripheral edge of the rotary wheel shell D12, and especially protrudes from a peripheral surface of the step, toward the axis of rotation. The peripheral surface of the step forms a rotary wheel shell sealing member D124 in this embodiment. That is, the rotary wheel shell sealing member is formed by an inner wall of the rotary wheel shell D12, and forms contact sealing with a rotary wheel sealing member D116 of the moisture absorption rotary wheel component D11. In other embodiments, the rotary wheel shell sealing member D124 can be a separately formed structure and mounted on the inner wall of the rotary wheel shell D12 or a structure integrally formed on the inner wall of the rotary wheel shell D12. Certainly, it may also be conceived that an assembled peripheral-side roller only protrudes from the inner peripheral wall of the rotary wheel shell D12 in an axial height of the peripheral-side roller, and may not be a structure that protrudes the most at the inner peripheral edge of the rotary wheel shell D12, so long as the moisture absorption rotary wheel component D11 can be in rolling contact with the peripheral-side roller for at least a period of time in a rotation process of the moisture absorption rotary wheel component D11.

In this way, when the moisture absorption rotary wheel component D11 has offset in the radial direction, the peripheral-side roller mechanism D122 limits the moisture absorption rotary wheel component D11 in a form of rolling contact, to assist the moisture absorption rotary wheel component D11 to operate along a set rotation trajectory of the moisture absorption rotary wheel component D11 without causing significant rotational resistance, especially prevents the moisture absorption rotary wheel component D11 from directly touching the rotary wheel shell D12, thereby reducing a risk that the moisture absorption rotary wheel component D11 is damaged.

In some embodiments, in an initial mounting position, the peripheral-side roller mechanism D122, especially the peripheral-side roller D1221 in the peripheral-side roller mechanism D122, is already in rolling contact with the outer peripheral surface of the moisture absorption rotary wheel component D11, and preferably, is already in rolling contact without mutual compression. In this way, the peripheral-side roller mechanism D122 can keep assisting the moisture absorption rotary wheel component D11 in rotating without significantly increasing rotational resistance of the moisture absorption rotary wheel component D11, to prevent the moisture absorption rotary wheel component D11 from shaking in the radial direction during rotation, thereby ensuring stable rotation of the moisture absorption rotary wheel component D11.

In other embodiments, in the initial mounting position, a tiny gap is present between the peripheral-side roller mechanism D122 and the outer peripheral surface of the moisture absorption rotary wheel component D11, especially between the peripheral-side roller D1221 in the peripheral-side roller mechanism D122 and the outer peripheral surface of the moisture absorption rotary wheel component D11, such that the moisture absorption rotary wheel component D11 is prevented from contacting the peripheral-side roller mechanism D122 when rotating around a set axis of rotation, and is in rolling contact with the peripheral-side roller mechanism D122 only when the moisture absorption rotary wheel component D11 deflects in the direction perpendicular to the axis of rotation, i.e., the radial direction. The peripheral-side roller mechanism D122 can protect the moisture absorption rotary wheel component D11 from directly colliding with the rotary wheel shell D12 here.

It is particularly favorable that the peripheral-side roller mechanism D122 is structured to be deformable. In some embodiments, the peripheral-side roller D1221 in the peripheral-side roller mechanism D122 is structured to be flexibly deformable. Therefore, when offseting in the radial direction, the moisture absorption rotary wheel component D11 can use a flexible deformation characteristic of the peripheral-side roller D1221 to cushion this offset.

In an additional or alternative embodiment, the peripheral-side roller support D1222 in the peripheral-side roller mechanism D122 can be configured to be offsetable, such that when the moisture absorption rotary wheel component D11 has offset in the radial direction, the peripheral-side roller support D1222 has offset under compression, and a spacing of the peripheral-side roller D1221 relative to the axis of rotation of the moisture absorption rotary wheel component D11 or the set axis of rotation changes. In an embodiment, the peripheral-side roller support D1222 is structured to be elastically deformable. In another embodiment, the peripheral-side roller support D1222 is structured to be integrally movable along a sliding track to change a distance from the axis of rotation. An elastic reset member, for example, a spring, for making the peripheral-side roller support return to an initial position is fixed on the rotary wheel shell D12. Specifically, the sliding track is formed by a recess structured in the rotary wheel shell D12 and a sliding block complementarily structured on the peripheral-side roller support, or the sliding track is formed by a guiding protrusion structured on the rotary wheel shell D12 and a guiding claw complementarily structured on the peripheral-side roller support.

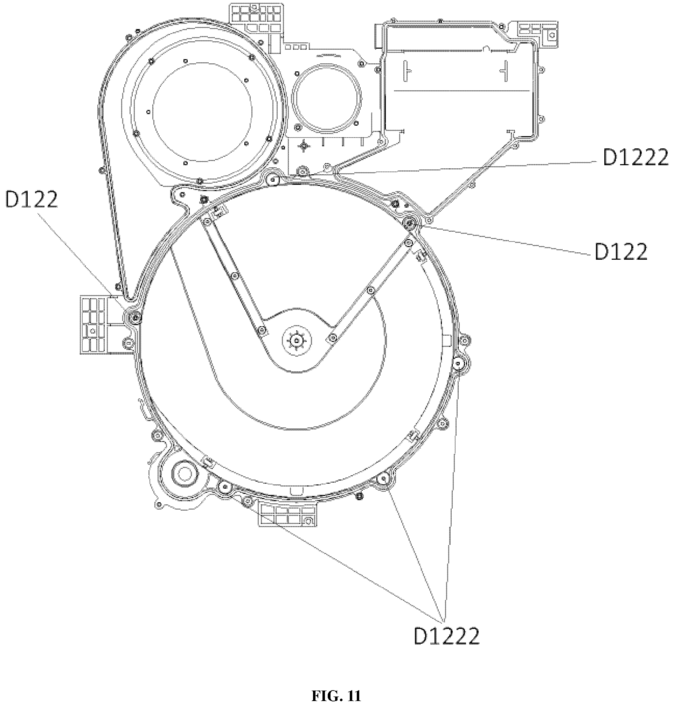

FIG. 11 is a top view of a rotary wheel lower shell with a peripheral-side roller mechanism. With reference to FIG. 11, six peripheral-side roller mechanisms D122 are arranged at an inner peripheral edge of the rotary wheel shell D12. To clearly show the peripheral-side roller support D1222, only two peripheral-side roller mechanisms D122 with the peripheral-side roller D1221 are shown in FIG. 3, and only the peripheral-side roller supports D1222 are shown for the remaining four peripheral-side roller mechanisms D122. These peripheral-side roller mechanisms D122 are uniformly distributed at the inner peripheral edge of the rotary wheel shell D12 in the same circumference in some embodiments. Each of the peripheral-side roller supports D1222 is configured with a circular hole here, and a rotating shaft of the peripheral-side roller D1221 is inserted into the circular hole. The peripheral-side roller supports D1222 can be integrally formed with the rotary wheel shell D12, or can be separately manufactured and then fixed to the rotary wheel shell D12. Because a circumferential driving manner is used for a rotary wheel, inevitably, a particular eccentric force is caused on the rotary wheel. A nonuniform arrangement manner may be used for the peripheral-side roller mechanisms D122. For example, more peripheral-side roller mechanisms D122 are arranged on a side away from a contact position between the rotary wheel driving mechanism D13 and the moisture absorption rotary wheel component D11, to counteract an impact caused by the foregoing eccentric force, and fewer peripheral-side roller mechanisms D122 are arranged on a side close to the contact position between the rotary wheel driving mechanism D13 and the moisture absorption rotary wheel component D11. For example, when the rotary wheel driving mechanism D13 and the moisture absorption rotary wheel component D11 act on each other in a form of gear engagement, a position of the gear engagement is the contact position between the rotary wheel driving mechanism D13 and the moisture absorption rotary wheel component D11. In this case, it is favorable to arrange more peripheral-side roller mechanisms D122 on a side away from a position of the gear engagement. For another example, when the rotary wheel driving mechanism D13 and the moisture absorption rotary wheel component D11 act on each other in a form of a belt pulley, a position at which a belt in the rotary wheel driving mechanism D13 and an outer peripheral edge of the moisture absorption rotary wheel component D11 compress each other is the contact position between the rotary wheel driving mechanism D13 and the moisture absorption rotary wheel component D11. In this case, it is favorable to arrange more peripheral-side roller mechanisms D122 on a side away from the position of compression.

In some embodiments, the peripheral-side roller support D1222 is fixed on the rotary wheel shell D12 through a second fixing mechanism, and the second fixing mechanism is structured to be capable of adjusting a radial spacing between the peripheral-side roller support and the moisture absorption rotary wheel component D11 in an initial mounting position. In this way, the peripheral-side roller mechanism D122 can adapt to moisture absorption rotary wheel components D11 of more sizes and can adapt to more running modes as described above, for example, the mode of being in contact with the moisture absorption rotary wheel component D11 in an initial state and the mode of being not in contact with the moisture absorption rotary wheel component D11 in an initial state.

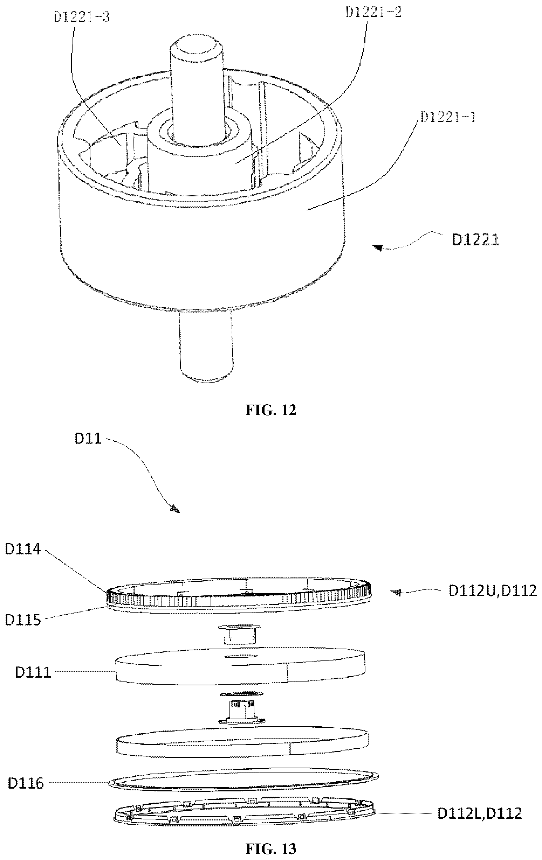

FIG. 12 is a schematic structural diagram of a peripheral-side roller. With reference to FIG. 12, a peripheral surface of the peripheral-side roller D1221 is structured to be basically smooth. In some other embodiments, the peripheral surface of the peripheral-side roller D1221 is structured with an uneven surface structure. The peripheral-side roller D1221 includes a peripheral-side roller body and a peripheral-side rotating shaft. In some embodiments, the peripheral-side roller body is rotatable with respect to the peripheral-side rotating shaft. The peripheral-side rotating shaft and the peripheral-side roller support D1222 only need to be connected together in a manner of being not rotatable with respect to each other here, for example, they are clamped together. In other embodiments, the peripheral-side roller body is not rotatable with respect to the peripheral-side rotating shaft. In this case, the peripheral-side rotating shaft and the peripheral-side roller support D1222 need to be connected together in a manner of being rotatable with respect to each other. The peripheral-side roller D1221 includes an inner ring D1221-1, an outer wheel ring D1221-2, and a spoke D1221-3 connecting the inner ring D1221-1 and the outer wheel ring D1221-2. At least two spokes D1221-3 are arranged and are flexibly deformable. Optionally, a connecting line of the spokes D1221-3 passing a connection point between the inner ring D1221-1 and the outer wheel ring D1221-2 does not pass through an axis of rotation of the roller. The inner ring D1221-1 may be understood as a rotating shaft or a tube sleeved over the rotating shaft. Certainly, the spoke D1221-3 may be made of a flexible material, for example, foam, or a silicone ring. The flexible material sleeves the inner ring D1221-1, and then the outer wheel ring D1221-2 sleeves the flexible material. The outer wheel ring D1221-2 may be arranged to be rigid or flexible.

FIG. 13 is an exploded view of a moisture absorption rotary wheel component D11. With reference to FIG. 13, the moisture absorption rotary wheel component D11 includes a wheel disk D111, an outer peripheral shell member D112, and a power input member D114, an auxiliary rotation ring D115, and a rotary wheel sealing member D116 that are configured at an outer peripheral edge of the outer peripheral shell member D112.

In some embodiments, the outer peripheral shell member D112 is formed by an outer peripheral upper clamping shell D112U and an outer peripheral lower clamping shell D112L that are annularly configured. The outer peripheral upper clamping shell D112U has a longitudinal section similar to an L shape, and includes an end portion section extending in the radial direction and a circumferential section extending in the axial direction. Similarly, the outer peripheral lower clamping shell D112L has a longitudinal section similar to an L shape, and includes an end portion section extending in the radial direction and a circumferential section extending in the axial direction. The outer peripheral upper clamping shell D112U and the outer peripheral lower clamping shell D112L are clamped to each other through a buckle and a clamping groove configured thereon respectively, such that a recess that is open on only one side for accommodating a peripheral edge area of the wheel disk D111 is formed on inner sides of the outer peripheral upper clamping shell D112U and the outer peripheral lower clamping shell D112L. In a clamped state, the outer peripheral upper clamping shell D112U and the outer peripheral lower clamping shell D112L surround the entire outer peripheral surface of the wheel disk D111 and respectively clamp the wheel disk D111 from upper and lower end surfaces of the peripheral edge area of the wheel disk D111, such that the outer peripheral shell member D112 and the wheel disk D111 are connected together in a manner of being not rotatable with respect to each other.

In some embodiments, the auxiliary rotation ring D115 is arranged on an outer peripheral surface of the outer peripheral upper clamping shell D112U. The auxiliary rotation ring D115 can be integrally formed with the outer peripheral upper clamping shell D112U, and can be separately manufactured and then fixed, for example, welded or bonded, on the outer peripheral surface of the outer peripheral upper clamping shell D112U. The auxiliary rotation ring D115 is arranged to match a position of the peripheral-side roller mechanism D122, especially the peripheral-side roller D1221 in the peripheral-side roller mechanism D122, to form rolling fit with the peripheral-side roller D1221 in the peripheral-side roller mechanism D122, as shown in FIG. 2. Certainly, it may also be conceived that the auxiliary rotation ring is arranged on the outer peripheral lower clamping shell.

In some embodiments, the auxiliary rotation ring D115 is structured as an annular protrusion. A degree to which the annular protrusion protrudes needs to ensure rolling contact with the peripheral-side roller D1221, even if the peripheral-side roller is not a structure that protrudes the most at the inner peripheral edge of the rotary wheel shell D12. In some other embodiments, the auxiliary rotation ring may be formed by a basic surface of the outer peripheral shell member. A peripheral surface of the auxiliary rotation ring can be configured to be smooth or configured with an uneven surface structure.

In some embodiments, a power input member D114 configured to introduce power from the rotary wheel driving mechanism D13 for rotating the moisture absorption rotary wheel component D11 and a rotary wheel sealing member D116 for forming relatively rotatable contact sealing with a rotary wheel shell sealing member D124 arranged at an inner peripheral surface of the rotary wheel shell D12 are further arranged on the outer peripheral surface of the outer peripheral upper clamping shell D112U. The power input member D114, the auxiliary rotation ring D115, and the rotary wheel sealing member D116 are completely staggered on an outer peripheral surface of the outer peripheral shell member D112 in a direction of the axis of rotation, and are sequentially arranged in a vertical direction. It may be conceived that the power input member D114, the auxiliary rotation ring D115, and the rotary wheel sealing member D116 may be arranged in a staggered manner along the axis of rotation in another sequence. Certainly, it may also be conceived that the power input member D114, the auxiliary rotation ring D115, and the rotary wheel sealing member D116 are arranged on an outer peripheral surface of the outer peripheral lower clamping shell D112L or distributed on outer peripheral surfaces of the outer peripheral upper clamping shell D112U and the outer peripheral lower clamping shell D112L. The power input member D114 and the auxiliary rotation ring D115 are integrally configured here, and certainly may be configured separately.

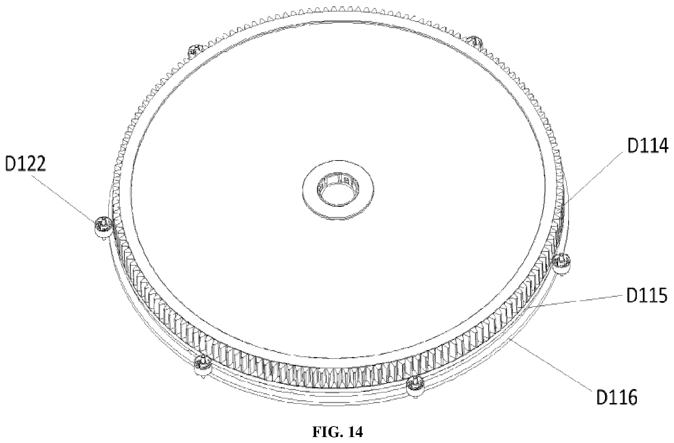

FIG. 14 is a schematic assembly diagram of a peripheral-side roller and an auxiliary rotation ring in rolling contact. With reference to FIG. 14, the rotary wheel sealing member D116 forms a maximum diameter of the moisture absorption rotary wheel component D11, and the peripheral-side roller mechanism D122 protrudes from an entire inner peripheral wall of the inner peripheral edge of the rotary wheel shell D12 toward the axis of rotation, to form rolling contact with an auxiliary rotation ring D115 with a smaller diameter.

It may also be conceived that the auxiliary rotation ring forms the maximum diameter of the moisture absorption rotary wheel component D11. In this case, compared with the peripheral-side roller mechanism, as a part of the inner peripheral surface of the rotary wheel shell, the rotary wheel shell sealing member fitting the rotary wheel sealing member is closer to the axis of rotation. The peripheral-side roller only needs to protrude from an inner peripheral wall of the peripheral-side roller in an axial height here. It needs to be noted here that if a gap is present between the peripheral-side roller mechanism and the auxiliary rotation ring in an initial mounting position, a size of the gap needs to be small enough to ensure that when the moisture absorption rotary wheel component D11 deflects in the radial direction, the rotary wheel sealing member can still rotate with respect to the rotary wheel shell sealing member. In other words, the auxiliary rotation ring of the moisture absorption rotary wheel component D11 needs to be in rolling contact with the peripheral-side roller mechanism before a deformation capability of the rotary wheel sealing member is completely consumed, to prevent the rotary wheel sealing member from being stuck with respect to the rotary wheel shell sealing member.

The drying module described above may further be applied to fields such as laundry dryers, dehumidifiers, and dishwashers that require dehumidification.

Although preferred embodiments of the present application have been described, persons of ordinary skill in the art may make additional changes and modifications to these embodiments once the basic inventive concepts are known. Therefore, the appended claims are intended to be construed to include the preferred embodiments as well as all changes and modifications that fall within the scope of the present application.

Obviously, persons skilled in the art may make various modifications and variations to the present application without departing from the spirit and scope of the present application. Therefore, if these modifications and variations of the present application are within the scope of the claims of the present application and their technical equivalents, the present application is also intended to encompass these modifications and variations.

## Claims

1. A drying module, comprising a moisture absorption and removal assembly, wherein the moisture absorption and removal assembly comprises a moisture absorption rotary wheel component, a rotary wheel shell, and a rotary wheel driving mechanism for driving the moisture absorption rotary wheel component to rotate, the moisture absorption rotary wheel component is rotatably arranged inside the rotary wheel shell and comprises an outer peripheral shell member, a power input member configured to introduce power from the rotary wheel driving mechanism for rotating the moisture absorption rotary wheel component is arranged at an outer peripheral edge of the outer peripheral shell member, and the power input member is driven by the rotary wheel driving mechanism at an outer peripheral edge of the power input member.

2. The drying module according to claim 1, wherein convex teeth are structured at a peripheral edge of the power input member, and the rotary wheel driving mechanism drives the power input member to rotate through meshing with the convex teeth.

3. The drying module according to claim 2, wherein the convex teeth are structured as straight teeth, helical teeth, curved teeth, or sprocket teeth with a specified tooth shape.

4. The drying module according to claim **1,** wherein profiled grooves are structured at a peripheral edge of the power input member, and the rotary wheel driving mechanism drives the power input member to rotate through meshing with the profiled grooves.

5. The drying module according to claim **1,** wherein a smooth surface is arranged at a peripheral edge of the power input member, and the rotary wheel driving mechanism drives the power input member to rotate through friction between the rotary wheel driving mechanism and the smooth surface.

6. The drying module according to claim 5, wherein a microsurface structure for increasing friction is structured on the smooth surface.

7. The drying module according to any one of claims 1 to 6, wherein the rotary wheel shell is further provided with an accommodating portion for accommodating the rotary wheel driving mechanism.

8. The drying module according to any one of claims 1 to 6, wherein the outer peripheral shell member is provided with a pair of end portion sections extending in a radial direction of the outer peripheral shell member, at least one bottom roller mechanism is arranged in an area that is in an inner bottom surface of the rotary wheel shell and is opposite to an end portion section of the outer peripheral shell member facing the inner bottom surface, and the end portion section of the outer peripheral shell member facing the inner bottom surface is capable of being in rolling contact with the bottom roller mechanism.

9. The drying module according to claim 8, wherein the bottom roller mechanism comprises a bottom roller and a bottom roller support, the bottom roller is rotatably arranged on the bottom roller support, the bottom roller support is arranged on the rotary wheel shell, the bottom roller is arranged between the moisture absorption rotary wheel component and the rotary wheel shell, and a spacing between the bottom roller and the moisture absorption rotary wheel component is less than a minimum spacing between the moisture absorption rotary wheel component and the rotary wheel shell.

10. The drying module according to claim 9, wherein in an initial mounting position, the bottom roller mechanism is in contact with a bottom of the moisture absorption rotary wheel component.

11. The drying module according to claim 9, wherein in an initial mounting position, a gap is present between the bottom roller mechanism and the moisture absorption rotary wheel component, and when the moisture absorption rotary wheel component has offset, the moisture absorption rotary wheel component is in rolling contact with the bottom roller mechanism.

12. The drying module according to any one of claims 9 to 11, wherein a plurality of bottom roller mechanisms is arranged on the inner bottom surface of the rotary wheel shell, and the plurality of bottom roller mechanisms is distributed on the inner bottom surface of the rotary wheel shell in the same circumference.

13. The drying module according to any one of claims 9 to 11, wherein the bottom roller mechanism is structured to be non-deformable or slightly deformable.

14. The drying module according to any one of claims 9 to **11,** wherein the bottom roller at least partially protrudes from the entire inner bottom surface of the rotary wheel shell toward the moisture absorption rotary wheel component.

15. The drying module according to any one of claims 9 to 11, wherein the bottom roller support is integrally formed or connected to the inner bottom surface of the rotary wheel shell, the bottom roller support is structured as a hollow member, and an assembled bottom roller is partially accommodated in an inner cavity of the hollow member.

16. The drying module according to any one of claims 9 to 11, wherein the bottom roller support is fixed on the rotary wheel shell, and in the initial mounting position, an axial spacing between the bottom roller support and the moisture absorption rotary wheel component is adjustable.

17. The drying module according to any one of claims 1 to 16, wherein an auxiliary rotation ring is arranged at the outer peripheral edge of the outer peripheral shell member, the auxiliary rotation ring and the power input member are arranged in a staggered manner, a peripheral-side roller mechanism is arranged at an inner peripheral edge of the rotary wheel shell, and the auxiliary rotation ring is in rolling contact with the peripheral-side roller mechanism.

18. The drying module according to claim 17, wherein at least one peripheral-side roller mechanism is arranged at the inner peripheral edge of the rotary wheel shell, the peripheral-side roller mechanism comprises a peripheral-side roller and a peripheral-side roller support, the peripheral-side roller is rotatably arranged on the peripheral-side roller support, the peripheral-side roller support is arranged at the inner peripheral edge of the rotary wheel shell, the peripheral-side roller is arranged in a size range of the moisture absorption rotary wheel component in an axial direction, the peripheral-side roller is arranged between the moisture absorption rotary wheel component and the rotary wheel shell, and the peripheral-side roller is capable of being in rolling contact with an outer peripheral surface of the moisture absorption rotary wheel component for at least a period of time in a rotation process of the moisture absorption rotary wheel component.

19. The drying module according to claim 18, wherein in the initial mounting position, the peripheral-side roller mechanism and the moisture absorption rotary wheel component are in rolling fit without mutual compression therebetween.

20. The drying module according to claim 18, wherein in the initial mounting position, a gap is present between the peripheral-side roller mechanism and the moisture absorption rotary wheel component, and when the moisture absorption rotary wheel component has offset, the moisture absorption rotary wheel component is in rolling contact with the peripheral-side roller mechanism.

21. The drying module according to any one of claims 18 to 20, wherein the peripheral-side roller is structured to be flexibly deformable, and/or the peripheral-side roller support is structured to be offsetable.

22. The drying module according to claim 21, wherein the peripheral-side roller comprises an inner ring, an outer wheel ring, and a spoke connecting the inner ring and the outer wheel ring, and at least two spokes are arranged and are configured to be flexibly deformable.

23. The drying module according to claim 21, wherein the peripheral-side roller support is structured to be elastically deformable, and/or
the peripheral-side roller support is structured to be integrally movable to change a spacing from an axis of rotation, and the peripheral-side roller support is capable of returning to an initial position under the action of an elastic force.

24. The drying module according to any one of claims 18 to 20, wherein when the moisture absorption rotary wheel component is driven by the rotary wheel driving mechanism at an outer peripheral edge of the moisture absorption rotary wheel component, a plurality of peripheral-side roller mechanisms are nonuniformly arranged at the inner peripheral edge of the rotary wheel shell, and more peripheral-side roller mechanisms are arranged on a side away from a contact position between the rotary wheel driving mechanism and the moisture absorption rotary wheel component.

25. The drying module according to any one of claims 18 to 20, wherein the moisture absorption rotary wheel component comprises the outer peripheral shell member, an auxiliary rotation ring for being in rolling fit with the peripheral-side roller mechanism is structured on an outer peripheral surface of the outer peripheral shell member, and the auxiliary rotation ring is structured as an annular protrusion.

26. The drying module according to any one of claims 1 to 3, wherein the peripheral-side roller support is fixed on the rotary wheel shell, and in the initial mounting position, a radial spacing between the peripheral-side roller support and the moisture absorption rotary wheel component is adjustable.

27. A washer-dryer machine, comprising the drying module according to any one of claims 1 to 26.
